# EUROPÄISCHE PATENTANMELDUNG

(11) **EP 4 276 552 A2**
(43) Veröffentlichungstag der Anmeldung: **15.11.2023**
(21) Anmeldenummer: 23167290.8
(22) Anmeldetag: 11.04.2023
(51) Int. Cl.: G05B 19/042

(54) **NETZGERÄT ZUR VERWENDUNG IN EINEM KOMMUNIKATIONSNETZ UND HERSTELLVERFAHREN FÜR EIN NETZGERÄT**

(30) Priorität: 12.05.2022 DE 102022111863
(71) Anmelder: Turck Holding GmbH, 58553 Halver (DE)
(72) Erfinder: Kriegel, Thomas, 58515 Lüdenscheid (DE); Schwagmann, Hermann, 32760 Detmold (DE)
(74) Vertreter: DTS Patent- und Rechtsanwälte Schnekenbühl und Partner mbB

(57) **Zusammenfassung**

Die vorliegende Erfindung betrifft ein Netzgerät, insbesondere als Sensor oder Aktor, umfassend mindestens eine Drahtloskommunikationseinrichtung zur Übermittlung der Daten und/oder zum Ablegen empfangener Daten durch von einer Sendeeinrichtung empfangene Energie, insbesondere durch Induktion empfangene Energie, wobei die Drahtloskommunikationseinrichtung einen durch die empfangene Energie betreibbaren ID-Speicher umfasst oder hiermit verbunden ist, in dem mindestens ein UAID (unified address identification) nicht flüchtiger, lesbar und (über-)schreibbar gespeichert werden kann, der mittels der Drahtloskommunikationseinrichtung ausgelesen oder (über-)beschrieben werden kann, und wobei mindestens ein nicht flüchtiger, lesbarer und (über-)beschreibbarer Betriebsspeicher vorgesehen ist, in dem eine für den Betrieb des Netzgerätes mindestens teilweise nötigen Betriebsdaten (Konfiguration) des Netzgerätes speicherbar sind. Weiterhin umfasst die Erfindung ein zugehöriges Herstellverfahren.

## Beschreibung

Die vorliegende Erfindung betrifft ein Netzgerät für einen Automatisierungsprozess nach dem Oberbegriff des Anspruchs 1 und ein Herstellverfahren für ein Netzgerät nach dem Oberbegriff des Anspruchs 5.

Stand der Technik sind Hardwarekomponenten bekannt, deren Betriebssoftware eine hohe Individualisierungsoption bietet oder regelmäßig überschreibbar ist.

So offenbart die DE 10 2019 217 410 A1 eine Hardwarekomponente für eine Steuerung in der Automatisierungstechnik, die mindestens eine Kommunikationsschnittstelle zur Kommunikation mit einem Feldgerät aufweist und in einer Vielzahl von Betriebsmodi betreibbar ist. Dabei können charakteristische Betriebsparameter für einen Betriebsmodus vorgegeben werden, die in einer Speichereinrichtung ablegbar sind. Hierbei kann die Hardwarekomponente induktiv mit Energie über eine Drahtloskommunikationseinrichtung versorgt werden, welche weiterhin zur drahtlosen Übermittlung von Daten geeignet und bestimmt ist, wobei die Daten für die Betriebsparameter charakteristisch sind.

Aus der EP 3 226 129 A1 ist weiterhin ein Gerät und ein Verfahren bekannt, wobei zur drahtlosen Aktualisierung von RFID-basierten Geräten, mittels eines RFID-Lesegerätes ein RFID-Tag eines Gerätes abgefragt wird. Sollte die Gerätesoftware nicht der neuesten Version entsprechen, wird durch das RFID-Lesegerät ein Dateispeicherort zur Gerätesoftwareaktualisierung an das RFID-Tag des Geräts übermittelt. Schließlich wird durch eine auf dem Gerät ausgeführte Bootloader-Anwendung bestimmt, dass ein Geräte-Update (Software) verfügbar ist und das Update wird eingespielt.

Die Individualisierung oder Aktivierung mittels charakteristischer Betriebsparameter oder das Laden eines Updates, ist bei diesen Geräten oder gemäß der genannten Verfahren für Bedienpersonal nach wie vor sehr aufwändig durchzuführen.

Es ist die Aufgabe der vorliegenden Erfindung eine verbesserte Hardware und ein verbessertes Herstellverfahren vorzuschlagen.

Diese Aufgabe wird erfindungsgemäß gelöst durch eine Hardwarekomponente nach den Merkmalen des Anspruchs 1 und einem Verfahren nach den Merkmalen des Anspruches 5. Vorteilhafte Ausgestaltungen sind in den jeweiligen, zugehörigen Unteransprüchen angegeben.

Danach wird die Aufgabe gelöst durch ein Netzgerät, das insbesondere als Sensor oder Aktor ausgebildet ist und zur Verwendung in einem Kommunikationsnetz vorgesehen ist, das mindestens eine Drahtloskommunikationseinrichtung umfasst, die zur Übermittlung der Daten und/oder zum Ablegen empfangener Daten durch von einer Sendeeinrichtung empfangene Energie, insbesondere durch Induktion empfangene Energie ausgebildet ist. Hierbei umfasst die

Drahtloskommunikationseinrichtung ein durch die empfangene Energie betreibbaren ID-Speicher oder ist hiermit verbunden, worin mindestens ein UAID (unified address identification), wie beispielsweises eine lokale Netzwerk- oder Webadresse, eine MAC-ID, eine eSIM-ID oder eine Kombination hiervon, nicht flüchtig, lesbar und (über-)schreibbar gespeichert werden kann und der mittels der Drahtloskommunikationseinrichtung ausgelesen, beschrieben oder überschrieben werden kann. Weiterhin ist mindestens ein nicht flüchtiger, lesbarer, beschreibbarer und überschreibbarer Betriebsspeicher vorgesehen, in dem für den Betrieb des Netzgerätes mindestens teilweise nötige Betriebsdaten speicherbar sind.

Die Drahtloskommunikationseinrichtung ist insbesondere ein RFID-TAG, mit einem insbesondere integrierten Chip und einer RFID-Antenne, wobei der Chip einen integrierten Speicher aufweist oder mit einem Speicherelement verbunden ist.

Der ID-Speicher kann insbesondere ein Schnittstellenspeicher sein, in dem die UAID abgelegt ist. Hierbei ist der Schnittstellenspeicher ein Speicherbereich oder ein Speicherelement, der sowohl drahtlos über eine Luftschnittstelle, als auch durch einen angeschlossenen Mikroprozessor auslesbar und veränderbar ist.

Unter einem Netzgerät soll vorliegend nicht einschränkend insbesondere ein Modul, ein Gerät, eine Komponente, ein Stecker oder ein Feldgerät (Aktor, Sensor) eines Kommunikationsnetzes, wie beispielsweise für einen Automatisierungsprozess verstanden werden, wie insbesondere ein IO-Link, SPE oder ein Feldbus-System nach einem entsprechenden Standard oder in proprietäres System.

Eine vorteilhafte Ausführungsform kann darin bestehen, dass auch die Betriebsdaten des Betriebsspeichers durch von der Sendeeinrichtung empfangene Energie, insbesondere durch Induktion empfangene Energie, lesbar und (über-)schreibbar gespeichert werden können.

Bei einer weiteren, vorteilhaften Ausführungsform sind der ID-Speicher und der Betriebsspeicher ein einziges Speicherelement.

Zur Verhinderung von ungewollten oder missbräuchlichen Zugriffen auf den ID-Speicher und/oder den Betriebsspeicher kann es sinnvoll sein, einen zweistufigen Zugang vorzusehen. Daher kann bei einer weiteren vorteilhaften Ausführungsform vorgesehen sein, dass mindestens ein elektronisches Schaltelement vorgesehen ist, mittels welchem die Verbindung zum ID-Speicher der Drahtloskommunikationseinrichtung geschaltet werden kann, entweder durch
- kontaktlos empfangene Energie, insbesondere durch Induktion empfangene Energie,
- eine leitungsmäßig verbundene, übergeordnete Komponente des Kommunikationsnetzes und/oder
- ein Servicegerät, insbesondere durch ein Erfassungsgerät.

Insbesondere kann die Sendeeinrichtung eine Komponente des Servicegerätes und/oder des Erfassungsgerätes sein.

Von der Erfindung ist auch ein Herstellverfahren für ein Netzgerät zur Verwendung in einem Kommunikationsnetz betroffen, wobei die folgenden Schritt umfasst sind:
- Zusammenbau des Netzgerätes mit mechanischen, elektrischen und elektronischen Bauteilen und Komponenten, insbesondere mit allen für den bestimmungsgemäßen Betrieb erforderlichen Bauteilen,
- Speicherung von mindestens einem Teilumfang der für den bestimmungsgemäßen Betrieb erforderlichen Betriebsdaten des Netzgerätes, wobei der Teilumfang der Betriebsdaten eine Primärkonfiguration darstellt.

Hierbei werden die folgenden Herstellungsschritte durchgeführt:
- Erzeugung einer UAID (unified address identification) für ein Netzgerät,
- Zuordnung dieser UAID zu dem Netzgerät,
- Speicherung der UAID auf einem ID-Speicher des Netzgerätes
- Speicherung der UAID, insbesondere zusammen mit mindestens einer weiteren Netzgerät-Information in einem zentralen Prozessspeicher, wobei
- eine definierte Sekundärkonfiguration erzeugt und in dem zentralen Prozessspeicher zu einer UAID als virtuelle Sekundärkonfiguration gespeichert wird,
- Übertragung der virtuellen Sekundärkonfiguration auf ein Erfassungsgerät ,
- Erfassung des Netzgerätes durch ein Erfassungsgerät, und wobei mit der virtuellen Sekundärkonfiguration die Primärkonfiguration überschrieben wird, die die Sekundärkonfiguration auf dem Netzgerät darstellt.

Der Zusammenbau des Netzgerätes kann auch in einem vorgelagerten Herstellverfahren erfolgen und im Wesentlichen in einer Bereitstellung im Rahmen des beschriebenen Herstellverfahrens erfolgen. Insbesondere kann der Zusammenbau zeitlich unabhängig und mit anschließender zeitweiser Lagerung erfolgen.

Die zu einem physischen Netzgerät erzeugte UAID ist eine eindeutige Kodierung, mit der eine Verknüpfung zwischen dem physischen Netzgerät und insbesondere der dort genutzten oder zukünftig zu nutzenden Betriebsdaten hergestellt wird. Dabei soll Betriebsdaten eines Netzgerätes nicht einschränkend verstanden werden und beispielsweise sowohl Gerätedaten, Anwendungsprogramme, Bootprogramme und/oder Systemprogramme umfassen. Besonders bedeutsam sind hierbei die Gerätedaten und Anwendungsprogramme.

Unter einer Primärkonfiguration ist ein Anteil, ein erster Umfang oder eine erste Art von Betriebsdaten zu verstehen. Insbesondere ist Primärkonfiguration derart, dass diese keine oder einen nur sehr unvollständigen Nutzungsumfang des Netzgerätes ermöglicht. Analog stellt die Sekundärkonfiguration Betriebsdaten in einer Art und einem Umfang zur Verfügung, die die bestimmungsgemäße Nutzung eines Netzgerätes in einem Kommunikationsnetz ermöglicht. Die Primärkonfiguration umfasst insbesondere mindestens ein Bootprogram, mindestens eine Basisapplikation und/oder eine Basisfunktion des Gerätes.

Analog ist unter einer virtuellen Primärkonfiguration oder einer virtuellen Sekundärkonfiguration diese Art und/oder der Umfang an Betriebsdaten zu verstehen, wie vorstehend beschrieben, wobei diese sich in einem Prozessspeicher außerhalb des Netzgerätes befinden. Dieser Prozessspeicher kann sich beispielsweise in einer Cloud, einem Server, einem PC oder einem mobilen Gerät befinden, insbesondere auch in dem Erfassungsgerät.

Somit kann jedes Netzgerät auf dem Prozessspeicher einen digitalen Zwilling haben, der über die UAID verknüpft ist. Hierüber kann die Bereitstellung relevanter Daten, wie beispielsweise CAD-Zeichnungen, Handbücher, Konfigurationsdateien, etc. organisiert werden. Weiterhin kann jedes Updates auf das jeweilige Netzgerät erfolgen, durch Vorbereitung einer virtuellen Konfiguration auf dem Prozessspeicher und nachfolgendem Austausch der jeweiligen Konfiguration auf dem Netzgerät durch die vorbereitete Konfiguration.

Weiterhin kann es vorteilhaft sein, wenn die UAID auch in einem Mikroprozessor und/oder einem angeschlossenen Speicher des Netzgerätes hinterlegt wird, um auch einen Zugriff über das Kommunikationsnetz zu ermöglichen, wobei zusätzlich die Speicherung im ID-Speicher der Drahtloskommunikationseinrichtung erfolgt.

Es kann weiterhin vorteilhaft sein, die Erzeugung einer eindeutigen, unitären UAID bereits beim Zusammenbau vorzunehmen und diese UAID in Abhängigkeit von einem eindeutig gekennzeichneten Bauteil vorzunehmen, wie beispielsweise ein unitärer kodierter und verbauter Mikroprozessor, so dass die Anwesenheit des Mikroprozessors und/oder dessen unitäre Kennzeichnung die zu speichernde UAID darstellt und/oder mit einer UAID korreliert.

Die Sekundärkonfiguration ist die oder eine mögliche SOLL-Konfiguration, wobei insgesamt nach einer Sekundärkonfiguration weitere SOLL-Konfigurationen in analoger Weise erfolgen können, so dass nach einer Sekundärkonfiguration eine Tertiärkonfiguration, Quartärkonfiguration etc. erfolgt, und vorlaufend die jeweils zugehörige virtuelle Tertiärkonfiguration, virtuelle Quartärkonfiguration etc. auf dem Prozessspeicher erfolgt beziehungsweise eine erzeugte Konfiguration dort gespeichert wird

Es kann eine vorteilhafte Verfahrensvariante darin bestehen, dass in dem zentralen Prozessspeicher die Primärkonfiguration zusammen mit der jeweiligen UAID gespeichert wird, die somit eine (gemeinsame) virtuelle Primärkonfiguration bilden, wobei insbesondere diese virtuelle Primärkonfiguration mit weiteren Netzgerät-Informationen und/oder bezogenen Daten die virtuelle Primärkonfiguration darstellen.

Das Herstellverfahren stellt somit auch ein Verfahren zum Software-Update und/oder Rekonfiguration nach erster Inbetriebnahme dar. Dieses kann beispielsweise durch eine regelmäßige mindestens teilweise automatische Anfrage des Netzgerätes an eine übergeordnete Einheit des Kommunikationsnetzes geschehen. Beispielsweise kann die Anfrage an die UAID des Prozessspeichers geschehen, woraufhin ein Hash-Wert zur Konfiguration (Software-Versionsnummern, etc.) verglichen und ggf. eine Synchronisation, d.h. eine weitere (nächste) Konfiguration veranlasst wird.

Auf diese Weise kann der jeweils aktuelle Konfigurationsstatus oder -version im Prozessspeicher ausgelesen und kontrolliert werden.

Bei einer weiter verbesserten Verfahrensvariante kann vorgesehen werden, dass bei oder nach dem Überschreiben der Primärkonfiguration auf dem Netzgerät durch die virtuelle Sekundärkonfiguration zur Sekundärkonfiguration, auf dem Prozessspeicher eine von der UAID abhängige Sicherheitskennzeichnung hinterlegt wird, insbesondere eine Sicherheitskennzeichnung, die eine Fortschreibung der UAID darstellt.

Diese Sicherheitskennung kann beispielsweise durch eine Suffix-Variation der UAID erfolgen, so dass eine erhöhte Prozesssicherheit hergestellt ist und dasselbe Netzgerät nicht mehrfach mit einer bereits übertragenen Konfiguration bzw. den jeweiligen Betriebsdaten beschrieben wird.

Bei einer Variante des Herstellverfahrens kann vorgesehen werden, dass vor dem Überschreiben der Primärkonfiguration durch die virtuelle Sekundärkonfiguration, das Netzgerät mindestens zeitweise an einem festen oder mobilen Lagerort gelagert und/oder an einem Bestimmungsort innerhalb des Kommunikationsnetzes angeordnet wird.

Hierbei ist unter dem Begriff "anordnen" insbesondere auch das Verbinden des Netzgerätes über eine Kabelverbindung mit einer benachbarten, beispielsweise übergeordneten Komponente, zu verstehen, wie beispielsweise mit einer E/A-Karte, einer IO-Karte, einem Gateway oder einem Mastermodul.

Somit kann ein Grundtyp eines Netzgerätes beispielsweise an einem Ort produziert und mit einer Primärkonfiguration versehen werden. Anschließend erfolgt die Lagerung oder der Transport an den Bestimmungsort. Bei der vorstehenden zweiten Alternative, die sich auch der ersten Alternative zeitlich anschließen kann, wird das Netzgerät mit der Primärkonfiguration bereits in das Kommunikationsnetz eingebunden und erst anschließend mit der jeweils nötigen Sekundärkonfiguration versehen. Bei dieser zweiten Alternative kann vorgesehen werden, dass das Erfassungsgerät auch den Anbringungsort des Netzgerätes bzw. der jeweiligen UAID über ein geeignetes Erfassungssystem erfasst und speichert, wie beispielsweise ein Geotracker, eine Erfassung eines benachbarten Gerätes oder eine manuelle Eingabe und diese Informationen lokal und/oder in dem Prozessspeicher zur jeweiligen UAID speichert.

Auf diese Weise wird über den Schritt der Konfiguration mit einer Sekundärkonfiguration auch eine Kontrolle des Kommunikationsnetzes vorgenommen.

Bei einer besonders vorteilhaften Variante des Herstellverfahrens kann vorgesehen sein, dass die Primärkonfiguration derart ist, dass das Netzgerät allein hiermit
- in keinem vollständigen Betriebsmodus innerhalb des Kommunikationsnetzes betriebsbereit ist und/oder
- nicht durch ein übergeordnetes Bauteil in Betrieb genommen werden kann.

Eine solche Primärkonfiguration, die nur Rumpfdaten oder Betriebsdaten für eine minimale Grundfunktion umfasst, stellt einen erhöhten Diebstahlschutz oder Missbrauchsschutz dar. Sie ist weiterhin insbesondere mit zusätzlichen Kontrollschritten geeignet, fehlerhafte Nutzung zu vermeiden, wenn beispielsweise das Übertragen der Sekundärkonfiguration nur durch einen Mitarbeiter erfolgt, der eine höhere oder eine spezielle Qualifikation aufweist.

Eine weitere Verbesserung kann darin bestehen, dass die Übertragung der virtuellen Sekundärkonfiguration auf das Netzgerät als Sekundärkonfiguration folgendermaßen erfolgt:
- nach Einbau und Verbindung mit mindestens einer übergeordneten Komponente des Kommunikationsnetzes und/oder
- nach Spannungsversorgung und/oder einem Wake-up-Befehl durch mindestens eine übergeordnete Komponente des Kommunikationsnetzes.

Damit kann beispielsweise ein IO-Master oder eine E/A-Karte eine Grundspannung für das Netzgerät liefern, die gegebenenfalls ein elektronisches Schaltelement aktiviert, so dass nachfolgend der IP-Speicher beschreibbar wird. Unabhängig davon kann nach der Übertragung der Betriebsdaten für die Sekundärkonfiguration, ein eigenständiger Initialisierungsschritt erfolgen.

Insbesondere kann das Netzgerät prüfen, ob nach der Spannungsversorgung (Power UP), ob an dem Speicherort neue Betriebsdaten als neue Konfiguration zur Verfügung stehen und lädt diese automatisch nach.

Weiterhin kann das Netzgerät einem Erfassungsgerät und/oder seinem Umfeld, wie beispielsweise dem Lager, dem Nutzer des Kommunikationsnetzes seine finale UAID zur Verfügung stellen, so dass das Umfeld dem Netzgerät eine finale Kennzeichnung (Identifikation) geben kann, beispielsweise auf einer Umverpackung.

Die finale Konfiguration (Identifikation) des Auslieferungs- und/oder Betriebszustandes muss erst vor der Inbetriebnahme (Power Up) final definiert sein und kann bis dahin verändert werden. Dies könnte die Entfernung von Bugs betreffen oder die Ergänzung von speziellen Firmware-Funktionen.

Bei einem weiter verbesserten Herstellverfahren kann nach der Erfassung des UAID durch das Erfassungsgerät vorgesehen sein, dass ein auf dem Netzgerät applizierbares Etikett erzeugt wird, wobei Etikett optisch und/oder maschinell lesbare Inhalte oder Daten aufweist, welche mit mindestens einer Information des Netzgerätes korrelieren, insbesondere mit der Sekundärkonfiguration und/oder der UAID korrelieren.

Das Etikett kann jede beliebige Bauform haben, wobei dies insbesondere
- ein bedrucktes Etikett sein kann oder
- ein RFID-TAG, der von einer selbstklebenden Folie getragen wird und vom Erfassungsgerät beschrieben werden kann.

Hierbei kann mindestens ein Teil der Inhalte kryptisiert sein, insbesondere im Falle eines druckbaren Etiketts als ein scanbarer Code, wie ein QR-Code, der mit einem Scanner gelesen werden kann.

Häufig ist es in komplexen Anlagen sinnvoll, redundante Sicherheitsschritte vorzusehen, um unabhängige Überprüfungsschritte zu etablieren.

Somit kann eine zusätzliche Verbesserung des Herstellverfahrens erfolgen, indem nach der Speicherung der Sekundärkonfiguration eine Freischaltung des Netzgerätes erfolgen muss, insbesondere durch
- ein erneutes (zweites) Auslesen des UAID,
- das Auslesen der Sicherheitskennung und/oder
- das Auslesen mindestens eines Teils der Inhalte des Etiketts.

Dabei meint Auslesen mindestens das Speichern der so erfassten Daten und Informationen, aber insbesondere auch das automatisierte Vergleichen der Daten und Informationen mit gespeicherten SOLL- oder Erwartungswerten. Diese Auswertung kann lokal in dem Erfassungsgerät oder in einer verbundenen, zentralen Prozessoreinheit und/oder einer Server- oder Cloud-Anwendung erfolgen.

Insgesamt kann es vorteilhaft sein, dass bei allen genannten Varianten des Herstellverfahrens eine der Ausführungsformen und Varianten des hierin beschriebenen Netzgerätes verwendet wird.

Insgesamt wird hierin ein bestimmtes Vorgehen und Herstellungsschritte in der Regel im Zusammenhang und für die Sekundärkonfiguration ausgeführt, wobei ein jeweils analoges Vorgehen für jede weitere virtuelle Konfiguration im Prozessspeicher oder jede weitere Konfiguration auf dem Netzgerät in analoger Weise gelten soll.

Weiterhin sollen alle zum Netzgerät ausgeführten Aspekte, Vorteile und Kombinationsmöglichkeiten in analoger Weise auch für das Herstellverfahren gelten und umgekehrt.

## Patentansprüche

1. Netzgerät zur Verwendung in einem Kommunikationsnetz, insbesondere einem Kommunikationsnetz für einen Automatisierungsprozess, umfassend mindestens eine Drahtloskommunikationseinrichtung zur Übermittlung der Daten und/oder zum Ablegen empfangener Daten durch von einer Sendeeinrichtung empfangene Energie, insbesondere durch Induktion empfangene Energie, **dadurch gekennzeichnet, dass** die Drahtloskommunikationseinrichtung ein durch die empfangene Energie betreibbaren ID-Speicher umfasst oder hiermit verbunden ist, in dem mindestens ein UAID (unified address identification) nicht flüchtiger, lesbar und (über-)schreibbar gespeichert werden kann, der mittels der Drahtloskommunikationseinrichtung ausgelesen oder (über-)beschrieben werden kann, und wobei mindestens ein nicht flüchtiger, lesbarer und (über)beschreibbarer Betriebsspeicher vorgesehen ist, in dem eine für den Betrieb des Netzgerätes mindestens teilweise nötigen Betriebsdaten (Konfiguration) des Netzgerätes speicherbar sind.

2. Netzgerät nach Anspruch 1, **dadurch gekennzeichnet, dass** der Betriebsspeicher durch von der Sendeeinrichtung empfangene Energie, insbesondere durch Induktion empfangene Energie, die Betriebsdaten im Betriebsspeicher lesbar und (über-)schreibbar gespeichert werden können.

3. Netzgerät nach Anspruch 1 oder 2, **dadurch gekennzeichnet, dass** der ID-Speicher und der Betriebsspeicher ein einziges Speicherelement sind.

4. Netzgerät nach einem der vorherigen Ansprüche, **dadurch gekennzeichnet, dass** mindestens ein elektronisches Schaltelement vorgesehen ist, mittels welchem die Verbindung zum ID-Speicher der Drahtloskommunikationseinrichtung geschaltet werden kann, entweder durch
- kontaktlos empfangene Energie, insbesondere durch Induktion empfangene Energie,
- eine leitungsmäßig verbundene, übergeordnete Komponente des Kommunikationsnetzes und/oder
- ein Servicegerät.

5. Herstellverfahren für ein Netzgerät zur Verwendung in einem Kommunikationsnetz, umfassend die folgenden Schritte:
- Zusammenbau des Netzgerätes mit mechanischen, elektrischen und elektronischen Bauteilen und Komponenten, insbesondere mit allen für den bestimmungsgemäßen Betrieb erforderlichen Bauteilen,
- Speicherung von mindestens einem Teilumfang der für den bestimmungsgemäßen Betrieb erforderlichen Betriebsdaten der Netzgerät,
**dadurch gekennzeichnet, dass**
der Teilumfang der Betriebsdaten eine Primärkonfiguration darstellt, und wobei folgende Herstellungsschritte erfolgen:
- Erzeugung einer UAID (unified address identification) für ein Netzgerät,
- Zuordnung dieser UAID dem Netzgerät,
- Speicherung der UAID auf einem ID-Speicher des Netzgerätes
- Speicherung der UAID, insbesondere zusammen mit mindestens einer weiteren Netzgerät-Information, wie beispielsweise Primärkonfiguration, Gerätetyp, Herstellungsdatum, etc. in einem zentralen Prozessspeicher, wobei
- eine definierte Sekundärkonfiguration erzeugt und in dem zentralen Prozessspeicher zu einer UAID als virtuelle Sekundärkonfiguration gespeichert wird,
- Übertragung der virtuellen Sekundärkonfiguration auf ein Erfassungsgerät,
- Erfassung des Netzgerätes durch das Erfassungsgerät, und wobei mit der virtuellen Sekundärkonfiguration die Primärkonfiguration überschrieben wird, die die Sekundärkonfiguration auf dem Netzgerät darstellt.

6. Herstellverfahren nach Anspruch 5, **dadurch gekennzeichnet, dass** in dem zentralen Prozessspeicher die Primärkonfiguration zusammen mit der UAID gespeichert wird und eine virtuelle Primärkonfiguration bildet, insbesondere mit weiteren auf das Netzgerät bezogene Daten die virtuelle Primärkonfiguration bilden.

7. Herstellverfahren nach Anspruch 5 oder 6, **dadurch gekennzeichnet, dass** bei oder nach dem Überschreiben der Primärkonfiguration durch die virtuelle Sekundärkonfiguration zur Sekundärkonfiguration, auf dem Prozessspeicher eine von der UAID abhängige Sicherheitskennzeichnung hinterlegt wird, insbesondere eine Sicherheitskennzeichnung, die eine Fortschreibung der UAID darstellt.

8. Herstellverfahren nach einem der Ansprüche 5 bis 7, **dadurch gekennzeichnet, dass** vor dem Überschreiben der Primärkonfiguration durch die virtuelle Sekundärkonfiguration zu der Sekundärkonfiguration, das Netzgerät
- mindestens zeitweise an einem festen oder mobilen Lagerort gelagert und/oder
- an einem Bestimmungsort innerhalb des Kommunikationsnetzes angeordnet wird.

9. Herstellverfahren nach einem der Ansprüche 5 bis 8, **dadurch gekennzeichnet, dass** die Primärkonfiguration derart ist, dass das Netzgerät allein hiermit
- in keinem vollständigen Betriebsmodus innerhalb des Kommunikationsnetzes betriebsbereit ist und/oder
- nicht durch ein übergeordnetes Bauteil in Betrieb genommen werden kann.

10. Herstellverfahren nach einem der Ansprüche 5 bis 9, **dadurch gekennzeichnet, dass** die Übertragung der virtuellen Sekundärkonfiguration auf das Netzgerät folgendermaßen erfolgt:
- nach Einbau und Verbindung mit mindestens einer übergeordneten Komponente des Kommunikationsnetzes und/oder
- nach Spannungsversorgung und/oder einem Wake-up-Befehl durch mindestens eine übergeordnete Komponente des Kommunikationsnetzes.

11. Herstellverfahren nach einem der Ansprüche 5 bis 10, **dadurch gekennzeichnet, dass** nach der Erfassung des UAID durch das Erfassungsgerät ein auf dem Netzgerät applizierbares Etikett erzeugt wird, wobei das Etikett optisch und/oder maschinell lesbare Inhalte aufweist, welche mit mindestens einer Information des Netzgerätes korrelieren, insbesondere mit der Sekundärkonfiguration und/oder der UAID korrelieren.

12. Herstellverfahren nach einem der Ansprüche 5 bis 11, **dadurch gekennzeichnet, dass** nach der Speicherung der Sekundärkonfiguration eine Freischaltung des Netzgerätes erfolgen muss, insbesondere durch
- ein erneutes (zweites) Auslesen des UAID,
- das Auslesen der Sicherheitskennung und/oder
- das Auslesen mindestens eines Teils der Inhalte des Etiketts.

13. Herstellverfahren nach einem der Ansprüche 5 bis 12, **dadurch gekennzeichnet, dass** das Netzgerät nach einem der Ansprüche 1 bis 4 ausgebildet ist.
